# EUROPEAN PATENT APPLICATION

(11) **EP 4 513 515 A1**
(43) Date of publication of application: **26.02.2025**
(21) Application number: 23791811.5
(22) Date of filing: 17.04.2023
(51) Int. Cl.: H01B 13/00, H01B 1/06, H01B 1/10, H01M 10/0562

(54) **METHOD FOR PRODUCING LGPS-BASED SOLID ELECTROLYTE, AND METHOD FOR PRODUCING ALL-SOLID-STATE BATTERY**

(30) Priority: 21.04.2022 JP 2022070073
(71) Applicant: MITSUBISHI GAS CHEMICAL COMPANY, INC., Chiyoda-ku Tokyo 100-8324 (JP)
(72) Inventor: NITANDA KATORI Aki, Niigata-shi, Niigata 950-3112 (JP)
(74) Representative: Vossius & Partner Patentanwälte Rechtsanwälte mbB
(86) International application number: PCT/JP2023/015270
(87) International publication number: WO 2023/204163

(57) **Abstract**

According to the present invention, it is possible to provide a method for producing an LGPS-based solid electrolyte, the method being characterized by comprising: a step for preparing Li₃PS₄ powder, or a step for producing Li₃PS₄ powder from at least Li₂S and P₂S₅; and a step for removing impurities in the Li₃PS₄ powder by adding, to the Li₃PS₄ powder, a solvent in which sulfur is contained in an amount of 0.1-1.75 mass% in an organic solvent.

## Description

### Technical Field

The present invention relates to a production method of an LGPS-based solid-state electrolyte and a production method of an all solid-state battery. Note that the LGPS-based solid-state electrolyte refers to a solid-state electrolyte containing Li, P, and S and having a specific crystal structure. Examples thereof include solid-state electrolytes containing Li, M (M is one or more elements selected from the group consisting of Ge, Si, and Sn), P and S.

### Background Art

In recent years, demand for lithium ion secondary batteries has increased in applications such as mobile information terminals, portable electronic apparatuses, electric vehicles, hybrid electric vehicles, and even stationary power storage systems. However, current lithium ion secondary batteries use a flammable organic solvent as electrolyte, so that a strong exterior to prevent the organic solvent from leaking out is required. In addition, there are restrictions on the structure of the apparatuses such as mobile personal computers, including requirement of a structure of the apparatuses to protect against the risk of electrolyte leakage.

Further, since the use thereof has expanded to moving objects such as automobiles and airplanes, stationary lithium ion secondary batteries are required to have a large capacity. Under these circumstances, safety is considered to be more important than ever, and efforts are being made to develop all solid-state lithium ion secondary batteries without use of harmful substances such as organic solvents.

For example, the use of oxides, phosphoric acid compounds, organic polymers, sulfides, etc. as solid-state electrolytes in all solid-state lithium ion secondary batteries has been studied.

Among these solid-state electrolytes, sulfides have high ionic conductivity and are relatively soft, so that a solid-solid interface can be easily formed. Sulfides are stable to active materials and has been developed as a practical solid-state electrolyte.

Examples of common methods for producing Li₃PS₄ as sulfide solid-state electrolyte include a synthesis method with use of a planetary ball mill and an organic solvent. However, unreacted Li₂S tends to remain in the synthesized Li₃PS₄. Furthermore, Li₂S is a solid, and there are few solvents for dissolving it. For example, although alcohol is a solvent that dissolves Li₂S, it also decomposes Li₃PS₄ (Patent Literature 1), so that it is difficult to separate Li₃PS₄ from Li₂S. Furthermore, although most of Li₄P₂S₇, which is a compound present as an intermediate, can be separated during filtration, a slight amount of Li₄P₂S₇ remains in Li₃PS₄ in synthesis using an organic solvent.

### Citation List

### Patent Literature

Patent Literature 1: Japanese Patent Laid-Open No. 2020-027781

### Summary of Invention

### Technical Problem

Under these circumstances, it is desired to provide a production method of an LGPS solid-state electrolyte having excellent productivity and good ionic conductivity.

### Solution to Problem

As a result of extensive study by the present inventors in view of the above problems, it has been found that in the case where unreacted Li₂S and intermediate Li₄P₂S₇ remain as impurities in Li₃PS₄, decrease in ionic conductivity is caused when an LGPS-based solid-state electrolyte is produced. The present inventors have unexpectedly found that an LGPS-based solid-state electrolyte having a good ionic conductivity can be produced by removing impurities in Li₃PS₄ powder with use of an organic solvent containing a specific amount of sulfur.

In other words, the present invention is as follows.
<1> Provided is a production method of an LGPS-based solid-state electrolyte, comprising:
   a step of preparing Li₃PS₄ powder or preparing Li₃PS₄ powder from at least Li₂S and P₂S₅; and
   a step of adding, to the Li₃PS₄ powder, a solvent in which sulfur is contained in an amount of 0.1-1.75 mass% in an organic solvent to remove impurities in the Li₃PS₄ powder.
<2> Provided is the production method according to item <1>, wherein the impurity includes unreacted Li₂S or an intermediate Li₄P₂S₇.
<3> Provided is the production method according to item <1> or <2>, wherein the organic solvent is at least one selected from the group consisting of tetrahydrofuran, acetonitrile, ethyl acetate, and methyl acetate.
<4> Provided is the production method according to any one of items <1> to <3>, wherein the step of removing impurities comprises stirring the Li₃PS₄ powder and the solvent and filtering the resulting mixture.
<5> Provided is the production method according to item <4>, wherein the step of removing impurities further comprises vacuum drying the filter residue after filtering the mixture.
<6> Provided is the production method according to any one of items <1> to <5>, wherein the Li₃PS₄ is β-Li₃PS₄.
<7> Provided is the production method according to any one of items <1> to <6>, comprising a step of firing a mixture of the Li₃PS₄ powder with impurities removed and Li₄SnS₄ prepared from Li₂S and SnS₂ in an inert gas atmosphere so as to produce an Sn-type LGPS-based solid-state electrolyte.
<8> Provided is the production method according to any one of items <1> to <7>, wherein the LGPS-based solid-state electrolyte has peaks at least at positions of 2θ=19.90°±0.50°, 20.20°±0.50°, 26.70°±0.50° and 29.20°±0.50°, in X-ray diffraction (CuKα: λ=1.5405 angstrom).
<9> Provided is the production method according to any one of items <1> to <8>, wherein the LGPS-based solid-state electrolyte mainly contains a crystal structure having an octahedron O composed of Li element and S element, a tetrahedron T₁ composed of one or more elements selected from the group consisting of P and Sn and S element, and a tetrahedron T₂ composed of P element and S element, wherein the tetrahedron T₁ and the octahedron O share an edge, and the tetrahedron T₂ and the octahedron O share an apex.
<10> Provided is a production method of an all solid-state battery, comprising a step of press-molding an LGPS-based solid-state electrolyte obtained by the production method according to any one of items <1> to <9>.

### Advantageous Effect of Invention

According to the present invention, the purity of Li₃PS₄ as raw material for an LGPS-based solid-state electrolyte can be improved, so that a production method of an LGPS-based solid-state electrolyte having good ionic conductivity can be provided. Furthermore, the production method is applicable also to mass production.

### Brief Description of Drawings

[Figure 1] Figure 1 is a schematic view showing the crystal structure of an LGPS-based solid-state electrolyte in an embodiment of the present invention.
[Figure 2] Figure 2 is a schematic cross-sectional view showing an all solid-state battery in an embodiment of the present invention.
[Figure 3] Figure 3 is a graph showing the X-ray diffraction measurement results of Li₃PS₄ powder obtained after the step of removing impurities in each of Examples and Comparative Examples. In Comparative Example 1, however, no impurity removal step was performed.
[Figure 4] Figure 4 is a graph showing the results of ³¹P solid-state NMR of the Li₃PS₄ powder obtained after the impurity removal step in Examples 1 and 2, and the Li₃PS₄ powder obtained without the impurity removal step in Comparative Example 1.
[Figure 5] Figure 5 is a graph showing the results of ³¹P solid-state NMR of the filter residue obtained by filtration and the powder obtained by concentrating the filtrate in the impurity removal step in Example 1, and the Li₃PS₄ powder obtained without performing the impurity removal step in Comparative Example 1.
[Figure 6] Figure 6 is a graph showing the results of ionic conductivity measurement of the solid-state electrolytes obtained in Examples 1 to 3 and Comparative Examples 1 to 2.

### Description of Embodiments

The production method of an LGPS-based solid-state electrolyte of the present invention is specifically explained as follows. Here, the materials, configurations, etc. described below do not limit the present invention, and can be variously modified within the scope of the spirit of the present invention.

### <Production method of LGPS-based solid-state electrolyte>

The production method of an LGPS-based solid-state electrolyte of the present invention includes a step of preparing Li₃PS₄ powder or preparing Li₃PS₄ powder from at least Li₂S and P₂S₅, and a step of adding, to the Li₃PS₄ powder, a solvent in which sulfur is contained in an amount of 0.1-1.75 mass% in an organic solvent to remove impurities in the Li₃PS₄ powder.

Li₃PS₄ for use in the present invention preferably has a peak at 420±10 cm⁻¹ in Raman measurement.

The LGPS-based solid-state electrolyte has peaks preferably at least at positions of 2θ=19.90°±0.50°, 20.20°±0.50°, 26.70°±0.50° and 29.20°±0.50°, in X-ray diffraction (CuKα: λ=1.5405 angstrom).

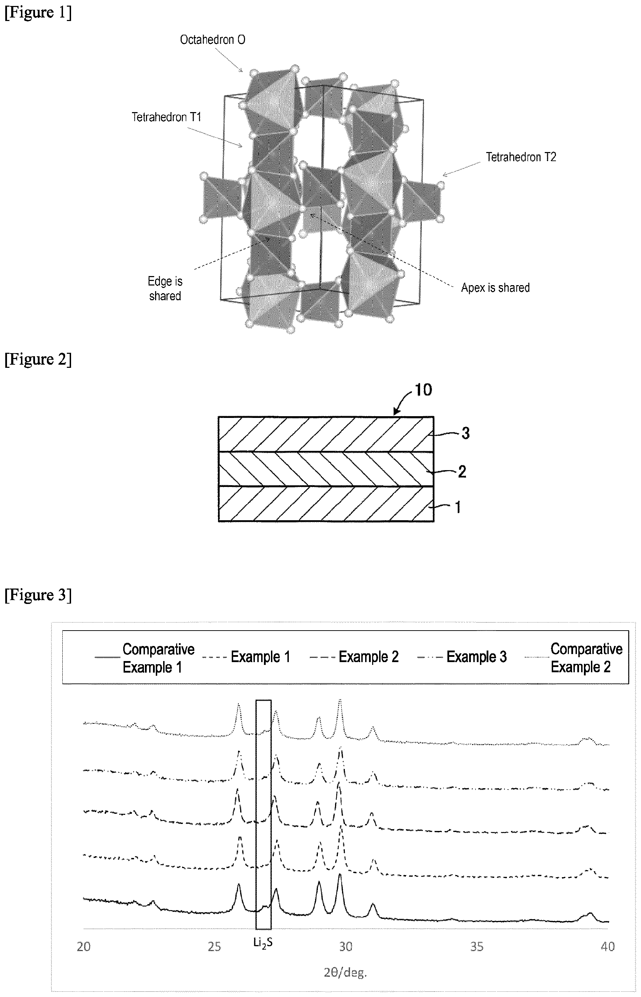

Further, as shown in Figure 1, it is preferable that the LGPS-based solid-state electrolyte mainly contain a crystal structure having an octahedron O composed of Li element and S element, a tetrahedron T₁ composed of one or more elements selected from the group consisting of P and Sn and S elements, and a tetrahedron T₂ composed of P element and an S element, wherein the tetrahedron T₁ and the octahedron O share an edge, and the tetrahedron T₂ and the octahedron O share an apex.

### <Preparation of Li₃PS₄>

Li₃PS₄ for use in the present invention may be any of α, β, and y, and β-LPS is more preferred. The reason for this is that it exists in a relatively stable state in the LGPS synthesis system.

Li₃PS₄ in the present invention may be a commercially available product. Alternatively, Li₃PS₄ may be produced by mechanically milling sulfides represented by Li₂S and P₂S₅ with a planetary ball mill, or may be synthesized, for example, from sulfides represented by Li₂S and P₂S₅ under an inert gas atmosphere such as argon.

In an example of the production methods of Li₃PS₄, Li₂S and P₂S₅ are weighed at a molar ratio of Li₂S:P₂S₅=3:1, and Li₂S and P₂S₅ are added in this order to tetrahydrofuran to have a (Li₂S+P₂S₅) content of 10 wt%. The mixture is mixed at room temperature for a predetermined time to obtain a precipitate. The precipitate is filtered to obtain a filter residue, which is vacuum dried to obtain Li₃PS₄.

In another example of the production methods of Li₃PS₄, Li₂S and P₂S₅ are weighed at a molar ratio of Li₂S:P₂S₅=1.5:1, and Li₂S and P₂S₅ are added in this order to tetrahydrofuran to have a (Li₂S+P₂S₅) content of 10 wt%. The mixture is mixed at room temperature for a predetermined time to obtain a homogeneous solution. On this occasion, a slight amount of precipitate may be present depending on the purity of the raw materials and the degree of reaction progress, which has no major effect on the purity of the resulting Li₃PS₄. In the case where a precipitate occurs, however, the precipitate may be removed by filtration. To the resulting homogeneous solution, Li₂S is further added, such that the total raw material composition including the above has a weight ratio of Li₂S:P₂S₅=3:1. The mixture is mixed at room temperature for a predetermined time to obtain a precipitate. The precipitate is filtered to obtain a filter residue, which is vacuum dried to obtain Li₃PS₄.

Li₂S for use may be a synthetic product or a commercially available product. Since mixing with water deteriorates other raw materials and precursors, the water content is preferably as low as possible, more preferably 300 ppm or less, particularly preferably 50 ppm or less.

Here, raw materials having an amorphous part may be used without any problem.

It is important for any raw material to have a small particle size, preferably in the range of 10 nm to 10 µm, more preferably in the range of 10 nm to 5 µm, still more preferably in the range of 100 nm to 1 µm of the particle diameter. Here, the particle size may be measured with an SEM, a particle size distribution measurement apparatus using laser scattering, or the like. Due to the small particle size, reactions occur more easily during heat treatment, and the generation of by-products can be suppressed.

P₂S₅ for use may be a synthetic product or a commercially available product. It is preferable that the purity of P₂S₅ be higher, because fewer impurities will be mixed into a solid-state electrolyte. The smaller the particle size of P₂S₅ is, the faster the reaction rate is, which is preferable. The particle size is preferably in the range of 10 nm to 100 µm, more preferably in the range of 10 nm to 30 µm, still more preferably in the range of 100 nm to 10 µm of the particle diameter.

### <Impurity removal step>

In the impurity removal step in the present invention, a solvent in which sulfur is contained in an amount of 0.1-1.75 mass% in an organic solvent is added to the Li₃PS₄ powder obtained as described above to remove impurities in the Li₃PS₄ powder. That is, it is necessary that 0.1 to 1.75 mass%, preferably 0.5 to 1.7 mass%, more preferably 1.0 to 1.7 mass%, of sulfur is contained in the total amount of the solvent.

The sulfur for use in the present invention preferably has high purity, and for example, pure sulfur (purity: 99.99%) manufactured by Kojundo Chemical Lab. Co., Ltd. is particularly preferably used.

The organic solvent contained in the solvent for use in the present invention preferably contains at least one selected from the group consisting of tetrahydrofuran, acetonitrile, ethyl acetate, and methyl acetate, and more preferably contains tetrahydrofuran.

In order to prevent the raw material composition from deteriorating, it is preferable to remove oxygen and moisture in the organic solvent. In particular, the moisture content is preferably 100 ppm or less, more preferably 50 ppm or less.

In the impurity removal step in the present invention, it is preferable that the Li₃PS₄ powder and the solvent be stirred and the resulting mixture be filtered.

The stirring method is not particularly limited, and may be performed in air or under an inert gas atmosphere. As the inert gas, nitrogen, helium, argon, etc. may be used, and deterioration of the raw material composition can be suppressed by also removing oxygen and moisture in the inert gas. The concentration of any of oxygen and moisture in the inert gas is preferably 1000 ppm or less, more preferably 100 ppm or less, particularly preferably 10 ppm or less.

The filtration method is not particularly limited, and may be performed under pressure or without application of pressure.

In the impurity removal step in the present invention, it is preferable that the filter residue after filtering the mixture is vacuum-dried further.

The vacuum drying method is not particularly limited. The drying temperature is usually about 100 to 200°C, and the drying time is usually about 2 to 6 hours.

In the impurity removal step in the present invention, it is preferable that at least one of unreacted Li₂S and intermediate Li₄P₂S₇ be included as impurities. By removing these impurities, an LGPS-based solid-state electrolyte with high ionic conductivity can be manufactured.

### <Atomization of Li₃PS₄>

In a preferred embodiment of the present invention, by mixing the Li₃PS₄ powder with the impurities removed with an acetonitrile solvent, atomization into about 1 µm can be achieved. Then, by drying the suspension under vacuum at a temperature of 150 to 210°C for 2 to 6 hours, atomized Li₃PS₄ powder with the coordinating solvent removed can be obtained.

### <Preparation of Li₄SnS₄>

A preferred embodiment of the present invention includes a step of producing an Sn-type LGPS-based solid-state electrolyte by firing a mixture obtained from Li₃PS₄ powder with impurities removed and atomized, and Li₄SnS₄ prepared from Li₂S and SnS₂ under an inert gas atmosphere.

Li₄SnS₄ for preferable use in the present invention may be a commercially available product, or may be synthesized from sulfides represented by Li₂S and SnS₂ in an inert gas atmosphere such as argon. In an example of the production method of Li₄SnS₄, weighing out at a molar ratio of Li₂S:SnS₂=2:1 is performed and the mixture is mixed in an agate mortar. Subsequently, the resulting mixture is put into a zirconia pot, into which zirconia balls are fed. The pot is completely sealed, and attached to a planetary ball mill machine. Mechanical milling is performed, so that Li₄SnS₄ can be produced.

In a preferred embodiment of the present invention, Li₄SnS₄ thus obtained is dissolved in an alcohol-based solvent to prepare a homogeneous solution.

Examples of the alcohol-based solvent include methanol, ethanol, 1-propanol, 1-butanol, 1-pentanol, 1-hexanol, 1-heptanol and 1-octanol. Among these, at least one selected from the group consisting of methanol, ethanol, 1-propanol and 1-butanol is preferred.

The dissolution is preferably performed under an inert gas atmosphere. As the inert gas, nitrogen, helium, argon, etc. may be used. Deterioration of the raw material composition can be suppressed by also removing oxygen and moisture in the inert gas. The concentration of any of oxygen and moisture in the inert gas is preferably 1000 ppm or less, more preferably 100 ppm or less, particularly preferably 10 ppm or less.

In a preferred embodiment of the present invention, the homogeneous solution thus obtained is dropped into acetonitrile, so that Li₄SnS₄ particles can be precipitated in acetonitrile. The precipitated particles are then dried under vacuum at a temperature of 150 to 210°C for 2 to 6 hours, so that Li₄SnS₄ powder with coordinating solvent removed can be obtained.

### <Production of LGPS-based solid-state electrolyte>

As described above, a preferred embodiment of the present invention includes a step of firing a mixture of the Li₃PS₄ powder with impurities removed and Li₄SnS₄ prepared as described above in an inert gas atmosphere so as to produce an Sn-type LGPS-based solid-state electrolyte.

In obtaining a mixture, with a molar ratio of Li₃PS₄:Li₄SnS₄=3:1 to 2:3, the resulting solid-state electrolyte has peaks of almost only LGPS crystals in XRD measurement, and high ionic conductivity is achieved. For example, in the case of Li_{9.81}Sn_{0.81}P_{2.19}S₁₂, mixing is performed at a molar ratio of Li₃PS₄:Li₄SnS₄=2.7:1.

The mixing is preferably performed under an inert gas atmosphere. As the inert gas, nitrogen, helium, argon, etc. may be used, and deterioration of the raw material composition can be suppressed by also removing oxygen and moisture in the inert gas. The concentration of any of oxygen and moisture in the inert gas is preferably 1000 ppm or less, more preferably 100 ppm or less, particularly preferably 10 ppm or less.

In a preferred embodiment of the present invention, the resulting mixture is heat-treated at 300 to 700°C to obtain an LGPS-based solid-state electrolyte. The heating temperature is preferably in the range of 350 to 650°C, more preferably in the range of 400 to 600°C. With a temperature of lower than 300°C, a desired crystal is hardly obtained, while with a temperature of higher than 700°C, crystals other than the desired crystal may be formed, resulting in decrease in ionic conductivity.

Although the heating time is changed slightly depending on the heating temperature, sufficient crystallization is usually achieved within the range of 0.1 to 24 hours. Heating at a high temperature for a long time exceeding the above range is not preferred, because there is a concern that the LGPS-based solid-state electrolyte may cause deterioration.

Heating may be performed in vacuum or under an inert gas atmosphere, preferably under an inert gas atmosphere. As the inert gas, nitrogen, helium, argon, etc. may be used, and among them, argon is preferred. Preferably, the content of oxygen and moisture is low.

The LGPS-based solid-state electrolyte of the present invention thus obtained may be formed into a desired molding by various means and used for various applications including an all solid-state battery described below. The molding method is not particularly limited. For example, a method similar to the method for forming each layer constituting the all solid-state battery to be described below may be used.

### <All solid-state battery>

The LGPS-based solid-state electrolyte of the present invention may be used, for example, as a solid-state electrolyte for all solid-state batteries. Also, according to a further embodiment of the present invention, an all solid-state battery including the solid-state electrolyte for an all-solid-state battery described above is provided.

The "all solid-state battery" here refers to an all solid-state lithium ion secondary battery. Figure 2 is a schematic cross-sectional view of an all solid-state battery according to an embodiment of the present invention. An all solid-state battery 10 has a structure with a solid-state electrolyte layer 2 disposed between a positive electrode layer 1 and a negative electrode layer 3. The all solid-state battery 10 may be used in various apparatuses including mobile phones, personal computers, and automobiles.

The LGPS-based solid-state electrolyte of the present invention may be included as a solid-state electrolyte in one or more of the positive electrode layer 1, the negative electrode layer 3, and the solid-state electrolyte layer 2. In the case where the LGPS-based solid-state electrolyte of the present invention is included in the positive electrode layer 1 or the negative electrode layer 3, the LGPS-based solid-state electrolyte of the present invention and a known positive electrode active material or negative electrode active material for lithium ion secondary batteries are used in combination. The quantitative ratio of the LGPS-based solid-state electrolyte of the present invention included in the positive electrode layer 1 or the negative electrode layer 3 is not particularly limited.

In the case where the LGPS-based solid-state electrolyte of the present invention is included in the solid-state electrolyte layer 2, the solid-state electrolyte layer 2 may be composed of the LGPS-based solid-state electrolyte of the present invention alone, or may include an oxide solid-state electrolyte (e.g. Li₇La₃Zr₂O₁₂), a sulfide-based solid-state electrolyte (e.g. Li₂S-P₂S₅), or other complex hydride solid-state electrolytes (e.g. LiBH₄ and 3LiBH₄-LiI) in combination.

The all solid-state battery is produced by molding each of the layers described above and laminating the layers, and the molding and laminating methods of each layer are not particularly limited.

Examples of the methods include a film forming method including applying a solid-state electrolyte and/or electrode active material dispersed in a solvent in a slurry state with a doctor blade or by spin coating, and then rolling the coating; a gas phase method for forming a film and laminating layers, such as vacuum deposition, ion plating, sputtering, and laser ablation; and pressure molding including forming powder by hot pressing or cold pressing without applying any temperature, and then laminating the powder.

Since the LGPS-based solid-state electrolyte of the present invention is relatively soft, a production method of an all solid-state battery including forming each layer and laminating the layers by pressure molding is particularly preferred. Pressure molding methods include hot pressing with heating, and cold pressing without heating, and a product can be formed satisfactorily even with cold pressing.

Note that the present invention includes a molding obtained by pressure molding the LGPS-based solid-state electrolyte of the present invention. The molding is suitably used as an all solid-state battery. Further, the present invention includes a production method of an all solid-state battery including a step of press molding the LGPS-based solid-state electrolyte of the present invention.

### Examples

The present embodiment is described in more detail with reference to Examples as follows, though the present embodiment is not limited to these Examples.

### (Example 1)

### <Production of β-Li₃PS₄>

In a glove box under an argon atmosphere, Li₂S (manufactured by Sigma-Aldrich, purity: 99.8%) and P₂S₅ (manufactured by Sigma-Aldrich, purity: 99%) were weighed out at a molar ratio of Li₂S:P₂S₅=3:1. Tetrahydrofuran (manufactured by FUJIFILM Wako Pure Chemical Corporation, ultra-dehydrated grade), Li₂S and P₂S₅ were added in this order to the flask at a concentration of (Li₂S+P₂S₅) of 10 wt%, and the mixture under an argon flow was refluxed for 24 hours while stirring at 200 rpm. The filter residue obtained by filtration of the mixture was vacuum-dried at 150°C for 4 hours, so that white powder of β-Li₃PS₄ was obtained.

### <Impurity removal step>

A tetrahydrofuran (THF) solution containing 1.75 mass% of sulfur (hereinafter referred to as "S-THF solution" in some cases) in an amount of 10 mL was added to 0.5 g of the β-Li₃PS₄ powder thus obtained, and stirred overnight. The mixture was filtered and washed three times with 10 mL of THF. The resulting filter residue was vacuum dried at 150°C for 4 hours, so that white powder of β-Li₃PS₄ with impurities removed was obtained.

### <Atomization of β-Li₃PS₄>

To 1 g of the β-Li₃PS₄ powder obtained in the step described above, 20 mL of acetonitrile was added and stirred for 2 days. After removal of acetonitrile from the resulting slurry at 50°C under reduced pressure, the coordinating solvent was removed by drying the resulting powder at 180°C under vacuum for 4 hours. The solvent was removed while stirring the solution. Atomized β-Li₃PS₄ powder was then obtained.

### <Production of Li₄SnS₄>

Li₂S (purity: 99.8%, manufactured by Sigma-Aldrich) and SnS₂ (purity: 99.9%, manufactured by Kojundo Chemical Lab. Co., Ltd.) were weighed out at a stoichiometric ratio of Li₄SnS₄ in a glove box under an argon atmosphere, and mixed in an agate mortar for 15 minutes. The resulting mixture in an amount of 1.0 g and 15 pieces of zirconia balls (outer diameter: 10 mm) were placed in a 45-mL zirconia pot and sealed. The zirconia pot was fixed to a planetary ball mill apparatus (manufactured by Fritsch Japan Co., Ltd.), and ball milling was performed at 370 rpm for 4 hours. The resulting precursor was fired at 450°C for 8 hours, so that Li₄SnS₄ as solid-state electrolyte was produced.

Subsequently, in a glove box under an argon atmosphere, 1 g of Li₄SnS₄ thus obtained was added to 20 mL of methanol (super dehydration grade, boiling point: 64°C, manufactured by FUJIFILM Wako Pure Chemical Corporation) as a good solvent, and mixed for 24 hours at room temperature (25°C). Li₄SnS₄ was gradually dissolved. Insoluble matters in the resulting solution derived from the production steps of Li₄SnS₄ was filtered with a membrane filter (polytetrafluoroethylene (PTFE), pore size: 1.0 µm), so that a good solvent solution dissolving Li₄SnS₄ was obtained.

Subsequently, in a glove box under an argon atmosphere, 120 mL of ultra-dehydrated acetonitrile was fed into a 300-mL flask, and the acetonitrile was brought to a total reflux state using a distillation apparatus. The good solvent solution in an amount of 20 mL thus prepared was dropped into acetonitrile. Methanol as solvent for the dropped alcohol solution evaporated after the dropping, so that Li₄SnS₄ particles precipitated in the acetonitrile. After completion of the dropping of the good solvent solution, the distillation was terminated when the tower top temperature reached 81°C (boiling point of acetonitrile: 82°C).

The coordinating solvent was removed by drying the resulting powder at 180°C for 4 hours under vacuum, so that Li₄SnS₄ powder was obtained.

### <Production of Sn-type LGPS-based solid-state electrolyte>

In a glove box under an argon atmosphere, the atomized β-Li₃PS₄ and Li₄SnS₄ were weighed out at a molar ratio of β-Li₃PS₄:Li₄SnS₄=2.7:1 and mixed in an agate mortar. The mixture was fired at 550°C for 2 hours in an argon atmosphere, so that an Sn-type LGPS-based solid-state electrolyte (Li_{9.81}Sn_{0.81}P_{2.19}S₁₂) crystal was obtained.

### (Example 2)

An Li_{9.81}Sn_{0.81}P_{2.19}S₁₂ crystal was produced in the same manner as in Example 1, except that a tetrahydrofuran (THF) solution containing 0.5 mass% of sulfur was used in <Impurity removal step> in Example 1.

### (Example 3)

An Li_{9.81}Sn_{0.81}P_{2.19}S₁₂ crystal was produced in the same manner as in Example 1, except that a tetrahydrofuran (THF) solution containing 0.1 mass% of sulfur was used in <Impurity removal step> in Example 1.

### (Comparative Example 1)

An Li_{9.81}Sn_{0.81}P_{2.19}S₁₂ crystal was produced in the same manner as in Example 1, except that no <Impurity removal step> was performed in Example 1.

### (Comparative Example 2)

An Li_{9.81}Sn_{0.81}P_{2.19}S₁₂ crystal was produced in the same manner as in Example 1, except that a tetrahydrofuran (THF) solution containing 0.05 mass% of sulfur was used in <Impurity removal step> in Example 1.

### <X-ray diffraction measurement>

The Li₃PS₄ powder obtained after the impurity removal step in each Example and Comparative Example was subjected to X-ray diffraction measurement ("X' Pert3 Powder" manufactured by PANalytical, CuKα: λ=1.5405 angstrom) under Ar atmosphere at room temperature (25°C). However, in Comparative Example 1, no impurity removal step was performed. The measurement results of Examples 1 to 3 and Comparative Examples 1 to 2 are shown in Figure 3. From the results in Figure 3, it can be seen that in Examples 1 to 3, Li₂S was removed by the impurity removal step.

### <³¹P solid-state NMR measurement>

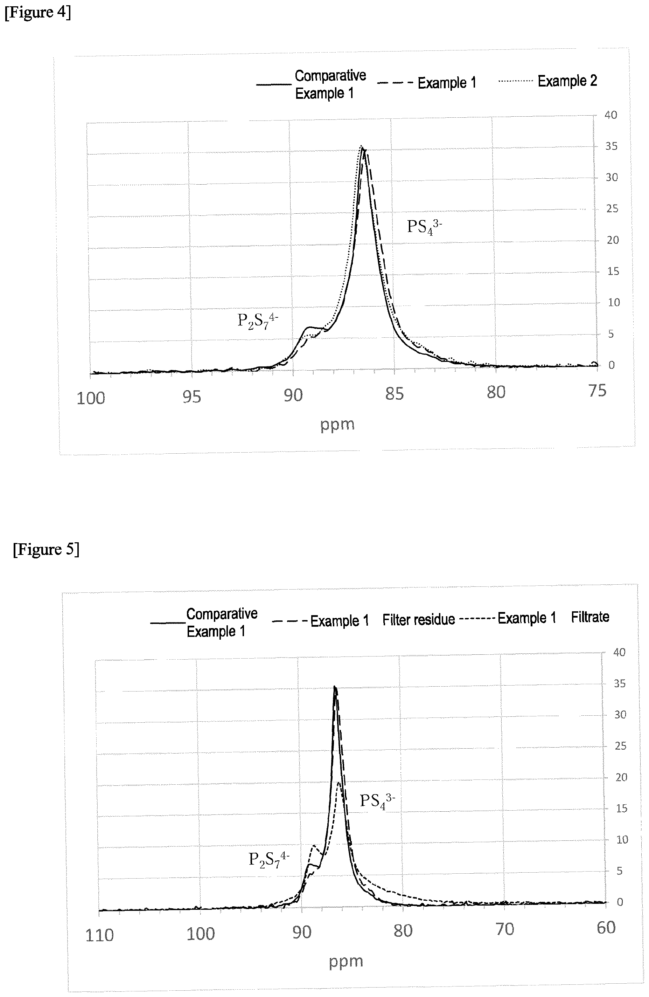

The Li₃PS₄ powder obtained after the impurity removal step in Examples 1 and 2 and the Li₃PS₄ powder obtained without the impurity removal step in Comparative Example 1 were subjected to ³¹P solid-state NMR under the following apparatus conditions and measurement conditions. The results are shown in Figure 4.

Further, the filter residue obtained by filtering in the impurity removal step and the powder obtained by concentrating the filtrate in Example 1, and the Li₃PS₄ powder obtained without performing the impurity removal step in Comparative Example 1 were subjected to ³¹P solid-state NMR measurement under the following apparatus conditions and measurement conditions. The results are shown in Figure 5.

### [Apparatus condition]

Apparatus: JEOL ECA-500 (manufactured by JEOL Ltd.)
Probe diameter: 3.2 mm (supporting non-exposure to atmosphere measurement)
Rotating speed: 10 kHz
Gas for Rotation: N₂ (supporting non-exposure to atmosphere measurement)
Sample tube: sleeve: zirconia

The samples were handled in a glove box.

### [Measurement condition]

Relaxation time (T1) measurement: Saturation recovery method
Waiting time: about T1×5
Main measurement: single pulse
Scan: ³¹P 32
Reference: ³¹P 85% H₃PO₄ aqueous solution

In the measurement procedure, the relaxation time was measured to calculate T1, and the single pulse measurement was performed with the waiting time set to about 5 times the T1 value. The waveforms of the obtained peaks were separated using a Lorentz function, and the integral value of each peak was obtained. The Li₄P₂S₇ content (mass%) in Li₃PS₄ was calculated from the resulting integral value.

Note that Li₃PS₄ has a peak in the range of 86.4±5 ppm, and Li₄P₂S₇ has a peak in the range of 89.0±5 ppm.

### <Lithium ion conductivity measurement>

The Sn-type LGPS solid-state electrolyte in an amount of 100 mg thus obtained was subjected to uniaxial molding (480 MPa), so that a disk with a thickness of about 1 mm and a diameter of 8 mm was obtained. AC impedance measurement by a four-terminal method using a lithium electrode at room temperature (25°C) and in the temperature range from 30°C to 100°C and to -20°C at 10°C intervals ("SI1260 IMPEDANCE/GAIN-PHASE ANALYZER" manufactured by Solartron Analytical) was performed to calculate the lithium ion conductivity.

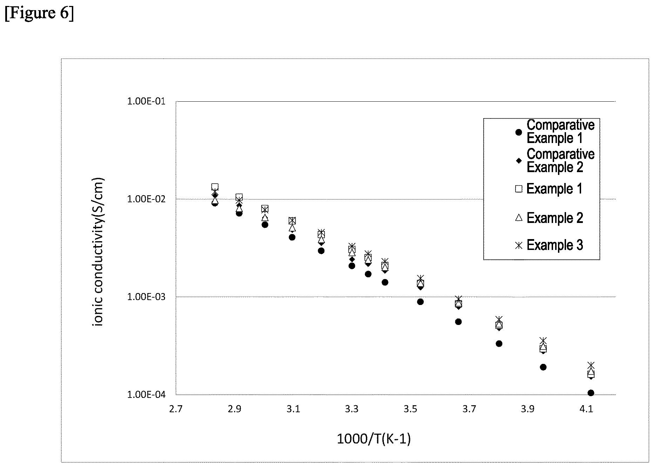

Specifically, the lithium ion conductivity was measured after holding the sample in a thermostatic chamber set at 25°C for 30 minutes. Then, the temperature of the thermostatic chamber was raised from 30°C to 90°C in an increment of 10°C. After holding the sample for 25 minutes at each temperature, the ionic conductivity was measured. After completion of the measurement at 90°C, the temperature of the thermostatic chamber was lowered in a decrement of 10°C from 80°C to 30°C, and the lithium ion conductivity was measured after holding each temperature for 40 minutes. Subsequently, the lithium ion conductivity of the sample was measured after holding in a thermostatic chamber set at 25°C for 40 minutes. Then, the temperature of the thermostatic chamber was lowered in a decrement of 10°C from 20°C to -30°C, and the lithium ion conductivity was measured after holding each temperature for 40 minutes. The measurement frequency range was 0.1 Hz to 1 MHz, and the amplitude was 50 mV. In Figure 6, the measurement results of lithium ion conductivity in lowering the temperature are shown.

### AC impedance method

### [Cell configuration]

Battery cell for evaluation: constraint-type cell/improved electrochemical cell SSBC-2 (SUS-303)
Electrode: SUS electrode/primary pressure: 120 MPa, secondary pressure: 480 MPa

### [Measurement condition]

Analyzer: Solartron SI 1260
Measurement control software: Z Plot
Display/analysis software: Z View
Measurement method: 4-terminal method
Voltage control: DC 0 V, AC 50 mV
Frequency: 0.1 Hz to 1 MHz

**[Table 1]**

| Table 1. Synthesis condition and ionic conductivity of each sample | | | | | |
|---|---|---|---|---|---|
| | Sulfur content in S-THF solution (mass%) | Recovery rate of Li₃PS₄ after purification of S-THF solution (%) | Li₂S content in Li₃PS₄* (mass%) | Li₄P₂S₇ content in Li₃PS₄** (mass%) | Ionic conductivity (mS/cm) |
| Comparative Example 1 | - | - | 6.6 | 18 | 1.7 |
| Comparative Example 2 | 0.05 | 95 | 8.8 | - | 2.2 |
| Example 1 | 1.75 | 35 | - | 6.7 | 2.7 |
| Example 2 | 0.5 | 94 | - | 7.1 | 2.4 |
| Example 3 | 0.1 | 93 | - | 10 | 2.6 |

| | | | | | |
|---|---|---|---|---|---|
| *Quantification was performed by an RIR method using the intensity ratio of the Li₃PS₄ diffraction line and the Li₂S diffraction line obtained from X-ray diffraction (XRD). For Li₂S, the 111 diffraction line, which is the strongest peak, was used, and for Li₃PS₄, the 221 diffraction line, which is the strongest peak, was used. The RIR method was performed based on the ratio of the integrated intensity in the range of 2θ of 26.7°±0.50° in X-ray diffraction to the integrated intensity in the range of 2θ of 29.2°±0.50°. Here, due to no detection of the Li₂S peak, the calculation was unable to be made for Examples 1 to 3. **Calculation was performed based on the following formula using the integral values of the Li₃PS₄ peak and the Li₄P₂S₇ peak obtained from ³¹P-NMR. (Integral value of Li₄P₂S₇)/(Integral value of Li₃PS₄)×100 | | | | | |

The sulfur concentration of the S-THF solution is 1.75 mass% at the maximum (saturated state). From the results in Table 1, it is shown that the amount of Li₃PS₄ recovered varied depending on the sulfur concentration. In Example 1, it is presumed that due to the high sulfur concentration, Li₃PS₄ was also dissolved, so that the recovery rate decreased.

Here, the recovery rate of Li₃PS₄ after purification of the S-THF solution in Examples 1 to 3 and Comparative Example 2 was calculated from: (Powder mass (g) of β-Li₃PS₄ after drying at 150°C after purification operation)/(Powder mass (g) before purification operation)×100.

Figure 4 is a graph of ³¹P solid-state NMR showing the Li₄P₂S₇ content in the Li₃PS₄ powder obtained after the impurity removal step in Examples 1 and 2, and the Li₄P₂S₇ content in the Li₃PS₄ powder obtained without the impurity removal step in Comparative Example 1. The results in Figure 4 show that a certain amount of impurity Li₄P₂S₇ can be removed regardless of the sulfur concentration contained in the S-THF solution.

Figure 5 is a ³¹P solid-state NMR graph showing the filtration effect by the S-THF solution. From the results shown in Figure 5, it can be seen that Li₃PS₄ is dissolved in the filtrate together with an impurity Li₄P₂S₇. It is presumed that with a high sulfur content in the S-THF solution, Li₃PS₄ is also dissolved and the recovery rate of Li₃PS₄ decreases, while with a reduced sulfur content in the S-THF solution, the proportion of Li₃PS₄ dissolved decreases, so that the recovery rate of Li₃PS₄ improves.

### Reference Signs List

1: Positive electrode layer
2: Solid-state electrolyte layer
3: Negative electrode layer
10: All solid-state battery

## Claims

1. A method for producing an LGPS-based solid-state electrolyte, comprising:
a step of preparing Li₃PS₄ powder or preparing Li₃PS₄ powder from at least Li₂S and P₂S₅; and
a step of adding a solvent in which sulfur is contained in an amount of 0.1 to 1.75 mass% in an organic solvent, to the Li₃PS₄ powder to remove impurities in the Li₃PS₄ powder.

2. The method according to claim 1, wherein the impurity includes unreacted Li₂S or an intermediate Li₄P₂S₇.

3. The method according to claim 1 or 2, wherein the organic solvent is at least one selected from the group consisting of tetrahydrofuran, acetonitrile, ethyl acetate, and methyl acetate.

4. The method according to any one of claims 1 to 3, wherein the step of removing impurities comprises stirring the Li₃PS₄ powder and the solvent and filtering the resulting mixture.

5. The method according to claim 4, wherein the step of removing impurities further comprises vacuum drying a filter residue after filtering the mixture.

6. The method according to any one of claims 1 to 5, wherein the Li₃PS₄ is β-Li₃PS₄.

7. The method according to any one of claims 1 to 6, comprising a step of firing a mixture of the Li₃PS₄ powder in which the impurities have been removed and Li₄SnS₄ prepared from Li₂S and SnS₂ in an inert gas atmosphere so as to produce an Sn-type LGPS-based solid-state electrolyte.

8. The method according to any one of claims 1 to 7, wherein the LGPS-based solid-state electrolyte has peaks at least at positions of 2θ=19.90°±0.50°, 20.20°±0.50°, 26.70°±0.50° and 29.20°±0.50°, in X-ray diffraction (CuKα: λ=1.5405 angstrom).

9. The method according to any one of claims 1 to 8, wherein the LGPS-based solid-state electrolyte mainly contains a crystal structure having an octahedron O composed of Li element and S element, a tetrahedron T₁ composed of one or more elements selected from the group consisting of P and Sn and S element, and a tetrahedron T₂ composed of P element and S element, wherein the tetrahedron T₁ and the octahedron O share an edge, and the tetrahedron T₂ and the octahedron O share an apex.

10. A method for producing an all solid-state battery, comprising a step of press-molding an LGPS-based solid-state electrolyte obtained by the method according to any one of claims 1 to 9.
